# EUROPEAN PATENT SPECIFICATION

(11) **EP 2 098 436 B1**
(45) Date of publication and mention of the grant of the patent: **03.08.2011**
(21) Application number: 09154098.9
(22) Date of filing: 02.03.2009
(51) Int. Cl.: B62D 5/06, B62D 5/08

(54) **Power steering gear housing with balanced flow pressure port**
Servolenkgetriebegehäuse mit Druckanschluss mit ausgeglichenem Fluss
Boîtier de direction avec port de pression à flux équilibré

(30) Priority: 04.03.2008 US 68200 P; 16.02.2009 US 371707
(43) Date of publication of application: 09.09.2009
(73) Proprietor: GM Global Technology Operations LLC, Detroit, MI 48265-3000 (US)
(72) Inventor: Douglas, Kevin P., Bay City, MI 48706 (US); Haupt, Jens, 61440, Oberursel (DE); Birsching, Joel Edward, Vassar, MI 48768 (US); Cowan, Bryan W., Bay City, MI 48706 (US)
(74) Representative: Manitz, Finsterwald & Partner GbR

(56) References cited:
- US-A- 4 258 752
- US-A- 4 651 622

## Description

The subject invention generally relates to a power steering system for a vehicle, and more specifically to a gear housing of the power steering system.

### Background of the Invention

Generally, vehicular power steering systems include a pump in fluid communication with a gear housing. The gear housing defines a valve bore and supports a steering valve within the valve bore. The gear housing further defines a pressure port. A fluid line is attached to the pressure port and interconnects the pump and the gear housing. A passageway interconnects the pressure port and valve bore in fluid communication, with the passageway defining an orifice into the valve bore. The pump pressurizes and circulates a power steering fluid to the gear housing, and more specifically, the pump circulates the power steering fluid through the fluid line to the pressure port, and through the passageway into the valve bore.

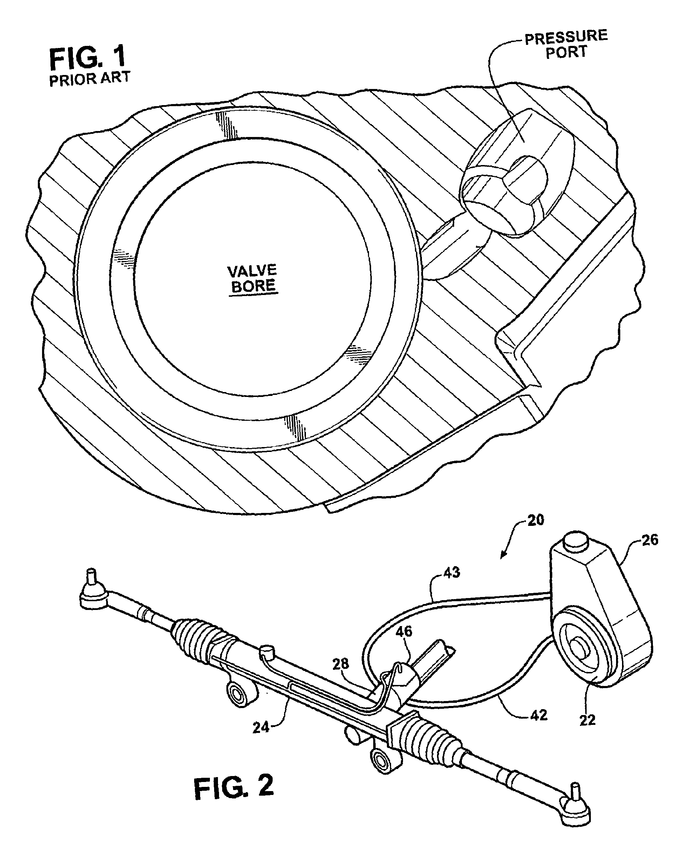

A typical gear housing is shown in Prior Art Figure 1, in which the gear housing defines a single passageway, having a single orifice, interconnecting the pressure port and the valve bore. The entire volume of the power steering fluid enters the valve bore through the orifice via the passageway. Design constraints of the typical gear housings limit the area of the orifice permitting entry of the power steering fluid into the valve bore. At high fluid velocities, having the entire volume of the power steering fluid enter through the single orifice creates an unbalanced or uneven flow of the power steering fluid through the valve bore. The unbalance flow of the power steering fluid causes undesirable vibrations in the steering valve, which produces an undesirable "hissing" noise noticeable by the occupants of the vehicle.

[0003a] US 4 651 622 A discloses a power steering system in accordance with the preamble of claim 1.

[0003b] It is an object of the present invention to provide an improved power steering system in which the undesirable hissing noise is reduced.

### Summary of the invention

[0003c] The object is satisfied by the features of claim 1. Preferred embodiments of the invention are mentioned in the dependent claims.

The subject invention provides a power steering system for a vehicle. The power steering system comprises a reservoir for storing a supply of a fluid. A pump is in fluid communication with the reservoir. The pump pressurizes and 5 circulates the fluid. A gear housing defines a valve bore, a pressure port and a plurality of orifices into the valve bore. The pressure port is in fluid communication with the pump, and receives the pressurized fluid from the pump. The plurality of orifices is in fluid communication with the valve bore and the pressure port. The plurality of orifices direct the fluid into the valve bore at 10 multiple locations about the valve bore.

Accordingly, the subject invention directs the power steering fluid into the valve bore through a plurality of orifices. By increasing the number of orifices through which the fluid enters the valve bore, the flow area through which the fluid flows is increased, which decreases the velocity of the fluid through the 15 orifices. The decreased velocity reduces vibration in the steering valve and thereby reduces the undesirable "hissing" noise.

### Brief description of the drawings

Other advantages of the present invention will be readily appreciated, as the same becomes better understood by reference to the following detailed description when considered in connection with the accompanying drawings.
Figure 1 is a cross-sectional view of a known gear housing.
Figure 2 is a schematic view of a power steering system.
Figure 3 is a cross sectional view of a first embodiment not covered by the invention of a gear housing of the power steering system.
Figure 4 is a cross sectional view of a second embodiment of a gear housing of the power steering system.

### Description of the preferred embodiments

Referring to the Figures, wherein like numerals indicate corresponding parts throughout the several views, a power steering system is shown at **20** in Figure 2. The power steering system **20** described herein is commonly referred to as a rack and pinion steering system **20**. However, it should be appreciated that the subject invention may be incorporated into and used with other types of power steering systems **20.**

Referring to Figure 2, the power steering system **20** includes a pump **22,** a steering gear **24** and a reservoir **26.** The reservoir **26** stores a supply of a power steering fluid. The pump **22** is in fluid communication with the reservoir 26 and in fluid communication with the steering gear **24.** The steering gear **24** is in fluid communication with the reservoir **26.** The fluid circulates from the pump **22,** through the steering gear **24,** and back to the reservoir **26.** The pump **22** pressurizes the power steering fluid and circulates the power steering fluid through the power steering system **20,** i.e., from the reservoir **26** to the steering gear **24,** and from the steering gear 24 back to the reservoir **26.**

The steering gear **24** includes a gear housing **28.** The gear housing **28** defines a pressure port **30,** a valve bore **32,** a plurality of orifices **34, 36** and a plurality of passageways **38, 40.** The pressure port **30** is in fluid communication with the pump **22.** The pressure port **30** receives the pressurize fluid from the pump **22.** A first fluid line **42** connects the pump **22** with the gear housing **28** of the steering gear **24,** and is attached to the steering gear **24** at the pressure port **30.** A second fluid line **43** connects the gear housing **28** with the reservoir **26.**

The valve bore **32** extends along a bore axis **44.** A steering valve **46** is disposed within the valve bore **32.** The steering valve **46** directs the power steering fluid to one of a first chamber and a second chamber of a power piston disposed within or adjacent to the gear housing **28** to assist in moving the rack as is known in the art.

The plurality of orifices **34, 36** is in fluid communication with and open into the valve bore **32.** The plurality of passageways **38, 40** interconnect the plurality of orifices **34, 36** and the pressure port **30.** Accordingly, the plurality of orifices **34, 36** are also in fluid communication with the pressure port **30.** The plurality of orifices **34, 36** direct the power steering fluid into the valve bore **32** at multiple locations about the valve bore **32.** Each of the plurality of orifices **34, 36** is disposed angularly about the bore axis **44** relative to all other of the plurality of orifices **34, 36.** By having the plurality of orifices **34, 36** introduce the power steering fluid, i.e., permit flow of the power steering fluid into, the valve bore 32, the flow of the power steering fluid is balanced, thereby reducing vibration of the steering valve **46** at high flows of the power steering fluid. The reduced vibration of the steering valve **46** reduces or eliminates the undesirable "hissing" noise heard by the occupants of the vehicle.

It should be appreciated that the gear housing **28** may define any number of orifices **34, 36** opening into the valve bore 32, and that the plurality of orifices **34, 36** may be disposed at any desirable location about the bore axis **44.** For example, the plurality of orifices **34, 36** may include four orifices **34, 36** equally spaced about the bore axis **44,** i.e., spaced ninety degrees apart from each other. Alternatively, the plurality of orifices **34,** 36 need not be spaced equidistant from each other, and may be randomly spaced about the bore axis **44.**

The gear housing **28** may include a valve housing 48. The valve housing **48** may define the valve bore **32,** the pressure port **30,** the plurality of orifices 34, **36** and the plurality of passageways **38, 40.** The valve housing **48** may be integrally formed with the gear housing **28.** Alternatively, the valve housing **48** may be a separate component rigidly connected to the gear housing **28.**

As shown, the plurality of passageways **38, 40** includes a first passageway **38** and a second passageway **40,** and the plurality of orifices 34, 36 includes a first orifice **34** and a second orifice 36. The first orifice **34** is in fluid communication with the first passageway **38,** and the second orifice **36** is in fluid communication with the second passageway **40.**

It should be appreciated that the pressure port **30** is an opening that extends into the gear housing **28.** Accordingly, the pressure port **30** extends along a port axis **50.** It should be appreciated that the port axis **50** may be disposed in any desirable orientation to accommodate differing design and space restraints. It should be further appreciated that the orientation of the port axis 50 is not related to the bore axis **44.**

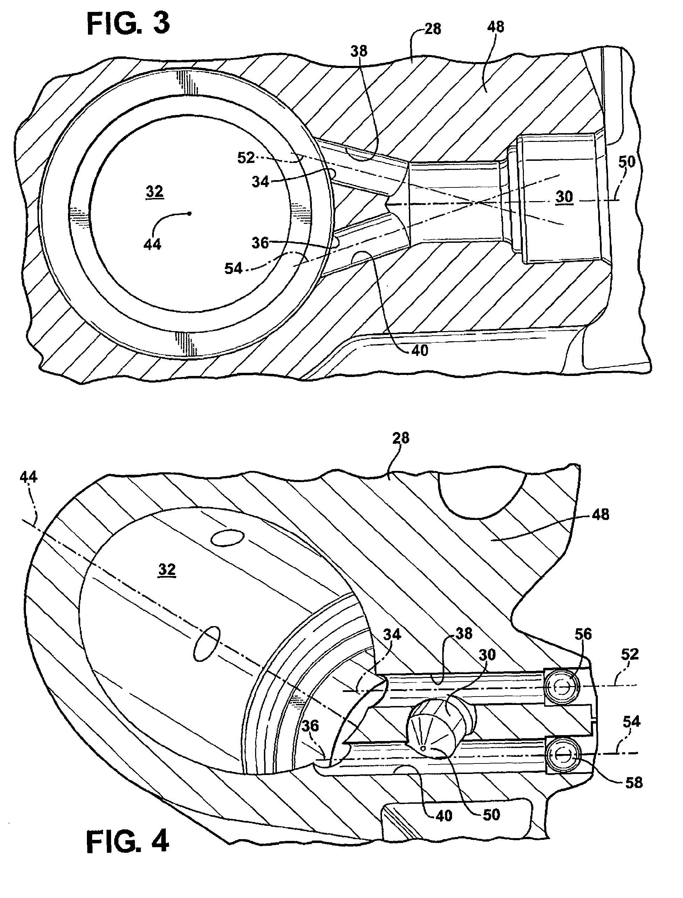

Referring to Figure 3, a first embodiment not covered by the invention of the gear housing is shown. The first embodiment of the gear housing **28** includes the pressure port 30, and thereby the port axis **50,** extending into the gear housing **28** in a direction generally transverse to the valve bore 32. In the first embodiment of the gear housing **28,** at least one of the plurality of passageways **38, 40;** i.e., at least one of the first passageway **38** and the second passageway **40,** is co-planar with the port axis **50.** As shown, both the first passageway **38** and the second passageway **40** are coplanar with the port axis **50.** The first passageway **38** extends along a first axis **52,** and the second passageway **40** extends along a second axis **54.** The first axis **52** intersects the second axis **54.** Accordingly, the first passageway **38** and the second passageway **40** are angled relative to each other, and form an acute angle therebetween.

It should be appreciated that the power steering fluid enters the gear housing **28** through the pressure port **30,** flows through the first passageway **38** and the second passageway **40** to the first orifice **34** and the second orifice **36** respectively, and into the valve bore **32.** Once the power steering fluid enters the valve bore **32,** the steering valve **46** directs the power steering fluid to one of the first chamber and the second chamber of the power piston as is well known.

In manufacture of the first embodiment of the gear housing **28,** the pressure port **30** is machined into the gear housing **28** first. After which, the first passageway **38** and the second passageway **40** are machined into the gear housing **28** via the pressure port **30,** and into the valve bore **32.**

Referring to Figure 4, a second embodiment of the gear housing is shown. The second embodiment of the gear housing **28** includes the port axis **50** being disposed in a generally parallel relationship relative to the valve bore **32.** At least one of the first passageway **38** and the second passageway **40** are disposed along a plane intersecting the port axis **50.** As shown, the plane is perpendicular to the port axis **50.** However, it should be appreciated that the plane need only be substantially perpendicular to the port axis **50,** i.e., the plane may be disposed at an approximate, but not quite, perpendicular angle relative to the port axis **50.**

As shown in the second embodiment of the gear housing **28,** the first passageway **38** and the second passageway **40** are co-planar. Additionally, the first passageway **38** and the second passageway **40** are parallel. A first plug **56** and a second plug **58** are disposed at a distal end of the first passageway **38** and the second passageway **40** respectively.

In manufacture, the pressure port **30** is machined into the gear housing **28.** After which, the first passageway **38** and the second passageway **40** are machined into the gear housing **28,** and at least partially intersect the pressure port **30.** The first passageway **38** and the second passageway **40** are machined past the pressure port 30 and into the valve bore **32.** The first plug 56 and the second plug **58** seal the first passageway **38** and the second passageway **40** respectively, so that the power steering fluid does not leak from the gear housing **28.** Accordingly, it should be appreciated that the power steering fluid flows into the pressure port **30,** through the first passageway **38** and the second passageway **40** to and through the first orifice **34** and the second orifice 36 respectively. The first plug **56** and the second plug **58** prevent the power steering fluid from flowing through the first passageway **38** and the second passageway **40** in a direction away from the first orifice **34** and the second orifice 36 respectively.

It should be appreciated that the gear housing **28** may also define a plurality of pressure ports **30,** with one of the plurality of passageways **38, 40** interconnecting each of the plurality of pressure ports **30** with one of the plurality of orifices **34, 36.**

## Claims

1. A power steering system (20) for a vehicle, said system (20) comprising:
a reservoir (26) for storing a supply of a fluid;
a pump (22) in fluid communication with said reservoir (26) for pressurizing and circulating the fluid;
a gear housing (28) defining a pressure port (30) in fluid communication with said pump (22) for receiving the pressurized fluid from said pump (22);
said gear housing (28) defining a valve bore (32) and a plurality of orifices (34, 36) in fluid communication with said valve bore (32) and
said pressure port (30) for directing the fluid into said valve bore (32) at multiple locations about said valve bore (32);
a plurality of passageways (38, 40) interconnecting said plurality of orifices (34, 36) and said pressure port (30);
wherein said plurality of passageways (38, 40) includes a first passageway (38) and a second passageway (40) and said plurality of orifices (34, 36) includes a first orifice (34) in fluid communication with said first passageway (38) and a second orifice (36) in fluid communication with said second passageway (40);
wherein said pressure port (30) extends along a port axis (50) and at least one of said first passageway (38) and said second passageway (40) is disposed along a plane intersecting said port axis (50);
**characterized in that**
said first passageway (38) and said second passageway (40) are parallel.

2. A system (20) as set forth in claim 1 wherein said valve bore (32) extends along a bore axis (44) and wherein each of said plurality of orifices (34, 36) is disposed angularly about said bore axis (44) relative to all other of said plurality of orifices (34, 36).

3. A system (20) as set forth in claim 1 wherein said plane is perpendicular to said port axis (50).

4. A system (20) as set forth in claim 1, 2 or 3 wherein said first passageway (38) and said second passageway (40) are co-planar.

## Patentansprüche

1. Servolenksystem (20) für ein Fahrzeug, wobei das System (20) umfasst:
ein Reservoir (26) zum Speichern einer Versorgung eines Fluides;
eine Pumpe (22) in Fluidkommunikation mit dem Reservoir (26) zum Druckbeaufschlagen und Zirkulieren des Fluides;
ein Getriebegehäuse (28), das einen Druckdurchlass (30) in Fluidkommunikation mit der Pumpe (22) zur Aufnahme des druckbeaufschlagten Fluides von der Pumpe (22) definiert;
wobei das Getriebegehäuse (28) eine Ventilbohrung (32) und eine Mehrzahl von Öffnungen (34, 36) in Fluidkommunikation mit der Ventilbohrung (32) und dem Druckdurchlass (30) zum Lenken des Fluids in die Ventilbohrung (32) an mehreren Stellen um die Ventilbohrung (32) herum definiert;
eine Mehrzahl von Durchgängen (38, 40), die die Mehrzahl von Öffnungen (34, 36) und den Druckdurchlass (30) verbinden;
wobei die Mehrzahl von Durchgängen (38, 40) einen ersten Durchgang (38) und einen zweiten Durchgang (40) aufweist und die Mehrzahl von Öffnungen (34, 36) eine erste Öffnung (34) in Fluidkommunikation mit dem ersten Durchgang (38) und eine zweite Öffnung (36) in Fluidkommunikation mit dem zweiten Durchgang (40) aufweist;
wobei sich der Druckdurchlass (30) entlang einer Durchlassachse (50) erstreckt und zumindest einer des ersten Durchganges (38) und des zweiten Durchganges (40) entlang einer die Durchlassachse (50) schneidenden Ebene angeordnet ist,
**dadurch gekennzeichnet, dass** der erste Durchgang (38) und der zweite Durchgang (40) parallel sind.

2. System (20) nach Anspruch 1,
wobei sich die Ventilbohrung (32) entlang einer Bohrungsachse (44) erstreckt, und wobei jede der Mehrzahl von Öffnungen (34, 36) winkelig um die Bohrungsachse (44) relativ zu allen anderen der Mehrzahl von Öffnungen (34, 36) angeordnet ist.

3. System (20) nach Anspruch 1,
wobei die Ebene rechtwinklig zu der Durchlassachse (50) ist.

4. System (20) nach einem der Ansprüche 1, 2 oder 3,
wobei der erste Durchgang (38) und der zweite Durchgang (40) koplanar sind.

## Revendications

1. Système de direction assistée (20) pour un véhicule, ledit système (20) comprenant :
un réservoir (26) pour stocker une réserve de fluide ;
une pompe (22) en communication fluidique avec ledit réservoir (26) pour mettre sous pression et pour faire circuler le fluide ;
un boîtier de mécanisme (28) définissant un orifice à pression (30) en communication fluidique avec ladite pompe (22) pour recevoir le fluide mis sous pression depuis ladite pompe (22) ;
ledit boîtier de mécanisme (28) définissant un perçage de valve (32) et une pluralité d'orifices (34, 36) en communication fluidique avec ledit perçage de valve (32) et avec ledit orifice à pression (30) pour diriger le fluide vers ledit perçage de valve (32) à une multiplicité d'emplacements autour dudit perçage de valve (32) ;
une pluralité de passages (38, 40) qui interconnectent ladite pluralité d'orifices (34, 36) et ledit orifice à pression (30) ;
dans lequel ladite pluralité de passages (38, 40) inclut un premier passage (38) et un second passage (40) et ladite pluralité d'orifices (34, 36) inclut un premier orifice (34) en communication fluidique avec ledit premier passage (38) et un second orifice (36) en communication fluidique avec ledit second passage (40) ;
dans lequel ledit orifice à pression (30) s'étend le long d'un axe d'orifice (50) et au moins un parmi ledit premier passage (38) et ledit second passage (40) est disposé le long d'un plan qui recoupe ledit axe d'orifice (50) ;
**caractérisé en ce que** ledit premier passage (38) et ledit second passage (40) sont parallèles.

2. Système (20) selon la revendication 1, dans lequel ledit perçage de valve (32) s'étend le long d'un axe de perçage (44), et dans lequel chacun de ladite pluralité d'orifices (34, 36) est disposé sous un angle autour dudit axe de perçage (44) par rapport à tous les autres de ladite pluralité d'orifices (34, 36).

3. Système (20) selon la revendication 1, dans lequel ledit plan est perpendiculaire audit axe d'orifice (50).

4. Système (20) selon la revendication 1, 2 ou 3, dans lequel ledit premier passage (38) et ledit second passage (40) sont coplanaires.
